# EUROPÄISCHE PATENTANMELDUNG

(11) **EP 3 722 346 A1**
(43) Veröffentlichungstag der Anmeldung: **14.10.2020**
(21) Anmeldenummer: 19168030.5
(22) Anmeldetag: 09.04.2019
(51) Int. Cl.: C08G 18/73, C08G 18/80, C08G 18/28

(54) **2-KOMPONENTEN-POLYURETHANBESCHICHTUNGEN MIT VERBESSERTER TOPFZEIT OHNE EINBUSSE IN DER WITTERUNGSSTABILITÄT**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft ein 2-Komponenten-System, welches mindestens eine spezifische N, S, O und Si haltige Verbindung enthält. Ferner betrifft die Erfindung ein Verfahren zur Herstellung von Silizium haltigen Polyurethanen, umfassend das Umsetzen der ersten Komponente mit der zweiten Komponente des 2-Komponenten-Systems gemäß der vorliegenden Erfindung und die daraus erhaltenen Silizium haltigen Polyurethane. Darüber hinaus betrifft die Erfindung die Verwendung des 2-Komponenten-Systems gemäß der vorliegenden Erfindung zur Herstellung von Lack, Dicht- oder Klebstoffen.

## Beschreibung

Die vorliegende Erfindung betrifft ein 2-Komponenten-System, welches mindestens eine spezifische N, S, O und Si haltige Verbindung enthält. Ferner betrifft die Erfindung ein Verfahren zur Herstellung von Silizium haltigen Polyurethanen, umfassend das Umsetzen der ersten Komponente mit der zweiten Komponente des 2-Komponenten-Systems gemäß der vorliegenden Erfindung und die daraus erhaltenen Silizium haltigen Polyurethane. Darüber hinaus betrifft die Erfindung die Verwendung des 2-Komponenten-Systems gemäß der vorliegenden Erfindung zur Herstellung von Lack, Dicht- oder Klebstoffen.

Silizium haltige 2-Komponenten-Polyurethane sind im Stand der Technik bekannt. Beispielsweise wird in der WO 2017/042177 A1 ein Beschichtungssystem auf Basis eines Thioallophanats beschrieben, das zwei NCO-Funktionalitäten und eine Silangruppe enthält. Dieser Vernetzer wird in eine Polyurethanklarlackformulierung basierend auf einem Polyisocyanat und einem Polyacrylatpolyol eingearbeitet. In der EP 2 641 925 A1 wird die Synthese von Silan-terminierten Präpolymeren und deren Einsatz in 2K-PU-Formulierungen beschrieben. In der WO 2014/037265 A1 wird die Synthese von Thiourethanen beschrieben, die mit sich selbst vernetzen. Es wird die Selbstvernetzung des Silan-terminierten Prepolymers als Beschichtungsmaterial beschrieben. Diese Druckschriften offenbaren jedoch lediglich Zusammensetzungen im Hinblick auf eine gute Kratzbeständigkeit.

Die Aufgabe der vorliegenden Erfindung war das Bereitstellen einer Silizium haltigen 2-Komponenten-Polyurethanbeschichtung, welche äquivalente Bewitterungseigenschaften wie gewöhnliche, nicht Silizium haltige 2-Komponenten-Polyurethanzusammensetzung aufweisen.

Die Erfinder der vorliegenden Erfindung haben zudem überraschend gefunden, dass mit den Systemen gemäß der vorliegenden Erfindung Beschichtungsmaterial mit einer verlängerten Topfzeit und verbesserter Kratzbeständigkeit erhalten werden kann.

Die Erfindung betrifft in einem ersten Aspekt ein 2-Komponenten-System umfassend oder bestehend aus
einer ersten Komponente, die
A1) mindestens eine Verbindung mit mindestens einer Zerewitinoff-aktiven Gruppe;
B1) gegebenenfalls mindestens einen Katalysator;
C1) gegebenenfalls mindestens ein Lösungsmittel; und
D1) gegebenenfalls mindestens ein Additiv
   umfasst oder daraus besteht und
einer zweiten Komponente, die
A2) mindestens ein Polyisocyanat; und
B2) mindestens eine der folgenden Verbindungen gemäß Formel (I): 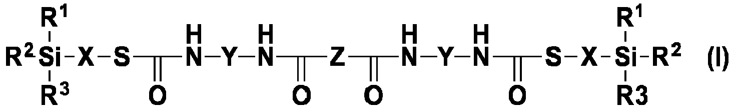 wobei
   R¹ bis R³ jeweils unabhängig voneinander für gleiche oder verschiedene gesättigte oder ungesättigte, lineare oder verzweigte, aliphatische oder cycloaliphatische oder gegebenenfalls substituierte aromatische oder araliphatische Reste mit bis zu 18 Kohlenstoffatomen, die gegebenenfalls bis zu 3 Heteroatome aus der Reihe Sauerstoff, Schwefel, Stickstoff enthalten können, vorzugsweise jeweils Alkylreste mit bis zu 6 Kohlenstoffatomen und/oder Alkoxyreste mit bis zu 6 Kohlenstoffatomen, die bis zu 3 Sauerstoffatome enthalten können, besonders bevorzugt jeweils Methyl, Methoxy und/oder Ethoxy stehen, mit der Maßgabe, dass mindestens einer der Reste R¹, R² und R³ über ein Sauerstoffatom mit dem Siliziumatom verbunden ist,
   X jeweils unabhängig voneinander für gleiche oder verschiedene gesättigte oder ungesättigte, lineare oder verzweigte, aliphatische oder cycloaliphatische oder gegebenenfalls substituierte aromatische oder araliphatische Reste mit bis zu 6 Kohlenstoffatomen, vorzugsweise lineare Alkylreste mit 1 bis 4 Kohlenstoffatomen stehen, besonders bevorzugt für einen Propylenrest (-CH₂-CH₂-CH₂-) steht;
   Y jeweils unabhängig voneinander für gleiche oder verschiedene gesättigte oder ungesättigte, lineare oder verzweigte, aliphatische oder cycloaliphatische oder gegebenenfalls substituierte aromatische oder araliphatische Reste mit bis zu 18 Kohlenstoffatomen, die gegebenenfalls bis zu 3 Heteroatome aus der Reihe Sauerstoff, Schwefel, Stickstoff enthalten können, stehen, bevorzugt ausgewählt aus Isophoronyl, Pentamethylen, Hexamethylen, Biscylohexylmethylen, Toluidenyl oder Methylendiphenylen; und
   Z für eine Struktureinheit steht, die von einem mindestens difunktionellen Polyol abgeleitet ist, das ein zahlenmittleres Molekulargewicht Mₙ von 270 bis 22000 g/mol, bevorzugt von 500 bis 18000 g/mol und besonders bevorzugt von 800 bis 12000 g/mol aufweist;
      oder
      für einen mehrwertigen Alkohol und/oder Ether- oder Esteralkohol steht, der 2 bis 14 Kohlenstoffatome, bevorzugt 4 bis 10 Kohlenstoffatome enthält;
C2) gegebenenfalls mindestens ein Lösungsmittel.
D2) gegebenenfalls mindestens ein Verbindung, die von der Verbindung nach Formel (I) verschieden ist, und durch Umsetzung mindestens einer Isocyanatgruppe mit einem sekundären Amin, das eine Silangruppe enthält, erhalten wird
umfasst oder daraus besteht.

In einem zweiten Aspekt betrifft die vorliegende Erfindung ein Verfahren zur Herstellung von Silizium haltigen Polyurethanen, umfassend das Umsetzen der ersten Komponente mit der zweiten Komponente des 2-Komponenten-Systems gemäß der vorliegenden Erfindung.

In einem dritten Aspekt betrifft die vorliegende Erfindung Silizium haltige Polyurethane erhältlich durch das Verfahren der vorliegenden Erfindung.

Schließlich betrifft die Erfindung in einem vierten Aspekt die Verwendung des 2-Komponenten-Systems gemäß der vorliegenden Erfindung zur Herstellung von Lack, Dicht- oder Klebstoffen.

"Mindestens ein", wie hierin verwendet, bezieht sich auf 1 oder mehr, beispielsweise 2, 3, 4, 5, 6, 7, 8, 9 oder mehr. Im Zusammenhang mit Bestandteilen der hierin beschriebenen Verbindungen bezieht sich diese Angabe nicht auf die absolute Menge an Molekülen, sondern auf die Art des Bestandteils. "Mindestens ein Katalysator" bedeutet daher beispielsweise, dass nur eine Art von Katalysatoren oder mehrere verschiedene Arten von Katalysatoren, ohne Angaben über die Menge der einzelnen Verbindungen zu machen, enthalten sein können.

Zahlenwerte, die hierin ohne Dezimalstellen angegeben sind, beziehen sich jeweils auf den vollen angegebenen Wert mit einer Dezimalstelle. So steht beispielsweise "99%" für "99,0%".

Der Ausdrücke "ungefähr" "ca." oder "etwa", in Zusammenhang mit einem Zahlenwert, bezieht sich auf eine Varianz von ±10% bezogen auf den angegebenen Zahlenwert, bevorzugt ±5%, besonders bevorzugt ±1%.

Der Ausdruck "im Wesentlichen frei von" bedeutet, dass die jeweilige Verbindung grundsätzlich enthalten sein kann, dann allerdings in einer Menge vorliegt, die eine Funktion der anderen Komponenten nicht beeinträchtigt. Im Rahmen der vorliegenden Erfindung wird daher unter der Eigenschaft "im Wesentlichen frei von" einer bestimmten Verbindung bevorzugt ein Gesamtgewicht von unter 0,1 Gew.-%, stärker bevorzugt unter 0,001 Gew.-%, insbesondere frei von dieser, bezogen auf das Gesamtgewicht der Zusammensetzung oder des Systems, angesehen.

Numerische Bereiche, die in dem Format "in/von x bis y" angegeben sind, schließen die genannten Werte ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

Angaben über das Molekulargewicht beziehen sich auf das gewichtsmittlere Molekulargewicht in g/mol, falls nicht explizit das zahlenmittlere Molekulargewicht genannt ist. Molekulargewichte werden bevorzugt mittels GPC unter Verwendung von Polystyrol-Standards ermittelt.

Insbesondere betrifft die Erfindung:
1. Ein 2-Komponenten-System umfassend oder bestehend aus
   einer ersten Komponente, die
   A1) mindestens eine Verbindung mit mindestens einer Zerewitinoff-aktiven Gruppe;
   B1) gegebenenfalls mindestens einen Katalysator;
   C1) gegebenenfalls mindestens ein Lösungsmittel; und
   D1) gegebenenfalls mindestens ein Additiv
      umfasst oder daraus besteht und
   einer zweiten Komponente, die
   A2) mindestens ein Polyisocyanat; und
   B2) mindestens eine der folgenden Verbindungen gemäß Formel (I): 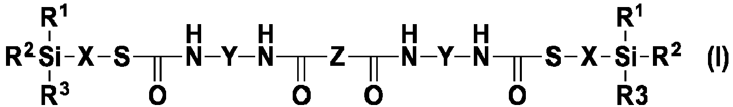 wobei
      R¹ bis R³ jeweils unabhängig voneinander für gleiche oder verschiedene gesättigte oder ungesättigte, lineare oder verzweigte, aliphatische oder cycloaliphatische oder gegebenenfalls substituierte aromatische oder araliphatische Reste mit bis zu 18 Kohlenstoffatomen, die gegebenenfalls bis zu 3 Heteroatome aus der Reihe Sauerstoff, Schwefel, Stickstoff enthalten können, vorzugsweise jeweils Alkylreste mit bis zu 6 Kohlenstoffatomen und/oder Alkoxyreste mit bis zu 6 Kohlenstoffatomen, die bis zu 3 Sauerstoffatome enthalten können, besonders bevorzugt jeweils Methyl, Methoxy und/oder Ethoxy stehen, mit der Maßgabe, dass mindestens einer der Reste R¹, R² und R³ über ein Sauerstoffatom mit dem Siliziumatom verbunden ist,
      X jeweils unabhängig voneinander für gleiche oder verschiedene gesättigte oder ungesättigte, lineare oder verzweigte, aliphatische oder cycloaliphatische oder gegebenenfalls substituierte aromatische oder araliphatische Reste mit bis zu 6 Kohlenstoffatomen, vorzugsweise lineare Alkylreste mit 1 bis 4 Kohlenstoffatomen stehen, besonders bevorzugt für einen Propylenrest (-CH₂-CH₂-CH₂-) steht;
      Y jeweils unabhängig voneinander für gleiche oder verschiedene gesättigte oder ungesättigte, lineare oder verzweigte, aliphatische oder cycloaliphatische oder gegebenenfalls substituierte aromatische oder araliphatische Reste mit bis zu 18 Kohlenstoffatomen, die gegebenenfalls bis zu 3 Heteroatome aus der Reihe Sauerstoff, Schwefel, Stickstoff enthalten können, stehen, bevorzugt ausgewählt aus Isophoronyl, Pentamethylen, Hexamethylen, Biscylohexylmethylen, Toluidenyl oder Methylendiphenylen; und
      Z für eine Struktureinheit steht, die von einem mindestens difunktionellen Polyol abgeleitet ist, das ein zahlenmittleres Molekulargewicht Mₙ von 270 bis 22000 g/mol, bevorzugt von 500 bis 18000 g/mol und besonders bevorzugt von 800 bis 12000 g/mol aufweist;
         oder
         für einen mehrwertigen Alkohol und/oder Ether- oder Esteralkohol steht, der 2 bis 14 Kohlenstoffatome, bevorzugt 4 bis 10 Kohlenstoffatome enthält;
   C2) gegebenenfalls mindestens ein Lösungsmittel.
   D2) gegebenenfalls mindestens ein Verbindung, die von der Verbindung nach Formel (I) verschieden ist, und durch Umsetzung mindestens einer Isocyanatgruppe mit einem sekundären Amin, das eine Silangruppe enthält, erhalten wird umfasst oder daraus besteht.
2. Das 2-Komponenten-System gemäß Gegenstand 1, dadurch gekennzeichnet, dass die mindestens eine Verbindung A1 ausgewählt ist aus Polyolen, Polyaminen, Polyetherpolyolen, Polyesterpolyolen, Polyurethanpolyolen, Polysiloxanpolyolen, Polycarbonatpolyolen, Polyetherpolyaminen, Polybutadienpolyolen, Polyacrylatpolyolen und Polymethacrylatpolyolen sowie deren Mischpolymerisate, bevorzugt ist die mindestens eine Verbindung A1 ausgewählt aus Polyacrylatpolyolen und Polymethacrylaten sowie deren Mischpolymerisate, Polyesterpolyolen und Polyurethanen, stärker bevorzugt ist die mindestens eine Verbindung A1 ein Polyol Polyacrylatpolyol oder Polymethacrylat sowie ein Mischpolymerisat davon.
3. Das 2-Komponenten-System gemäß Gegenstand 1 oder 2, dadurch gekennzeichnet, dass der mindestens eine Katalysator B1 ausgewählt ist aus der Klasse der Zinnkatalysatoren, Bismutkatalysatoren, Zinkkatalysatoren, Zirkoniumkatalysatoren und Aminbasen, stärker bevorzugt ist der mindestens eine Katalysator B1 ausgewählt aus Metallsalzen wie Zinkchlorid, Zink-2-ethylcaproat, Zinn(II)-octanoat, Zinn(II)-ethylcaproat, Dibutylzinn(IV)-dilaurat, Zirkonium(IV)-isopropylat, Zirkonium(IV)-n-butylat, Zirkonium(IV)-2-ethylhexanoat, Zirkonyloctanoat, Bismut(III)-2-ethylhexanoat und Bismut(III)-octoat.
4. Das 2-Komponenten-System gemäß einem der vorangehenden Gegenstände, dadurch gekennzeichnet, dass das mindestens eine Lösungsmittel C1 ausgewählt ist aus aromatischen Lösungsmitteln und aliphatischen Lösungsmitteln, bevorzugt aus Estern, Ethern, Benzol und dessen Derivaten, stärker bevorzugt ist das mindestens eine Lösungsmittel C1 ausgewählt aus Butylacetat, 1-Methoxy-2-propylacetat, 3-Methoxy-1-butylacetat, Ethylacetat, dibasischer Ester, Propylen-n-Butylether, Methylethylketon, Toluol, Xylol, Solvent Naphta (Kohlenwasserstoffgemisch) sowie deren Mischungen.
5. Das 2-Komponenten-System gemäß einem der vorangehenden Gegenstände, dadurch gekennzeichnet, dass das mindestens eine Additive D1 ausgewählt ist aus UV-Stabilisatoren, Antioxidantien und Verlaufsmittel, oder Mischungen davon, stärker bevorzugt ist das mindestens eine Additiv ausgewählt aus UV-Stabilisatoren auf Basis von Cyanacrylaten, Oxalaniliden, Benzophenonen, Benzotrizaolen, Triazinen, HALS-Aminen (hindered amine light stabilizers) und Silikon-freien und Silikon-haltigen Verlaufsmitteln, besonders bevorzugt sind die UV-Stabilisatoren Tinuvin 292 und Tinuvin 1130 sowie die Verlaufsmittel BYK 141 und BYK 311.
6. Das 2-Komponenten-System gemäß einem der vorangehenden Gegenstände, dadurch gekennzeichnet, dass das mindestens eine Polyisocyanat A2 ausgewählt ist aus Di- oder Triisocyanaten, wie 1,4-Butandiisocyanat, Pentamethylendiisocyanat, Hexamethylendiisocyanat, 4-Isocyanatomethyl-1,8-octandiisocyanat, 4,4'-Methylenbis(cyclohexylisocyanat), 1,-10-Decamethylendiisocyanat, 3,5,5-Tri-methyl-1-isocyanato-3-isocyanatomethylcyclohexan, 1,3- sowie 1,4-Bis(isocyanatomethyl)cyclohexan, Isophorondiisocyanat, 1,5-Naphthalindiisocyanat, Diisocyanatodiphenylmethan, wie 2,2'-, 2,4'- und 4,4'-MDI oder Mischungen daraus, Diisocyanatomethylbenzol, wie 2,4- und 2,6-Toluylendiisocyanat, und technische Gemische der beiden Isomeren sowie 1,3- und/oder 1,4-Bis(isocyanatomethyl)benzol, 3,3'-Dimethyl-4,4'-biphenyldiisocyanat, 1,4-Paraphenylendiisocyanat sowie Cyclohexyldiisocyanat und die aus vorgenannten, einzeln oder in Mischung erhältlichen, höhermolekularen Oligomeren mit Biuret-, Uretdion-, Isocyanurat-, Iminooxadiazindion-, Allophanat-, Urethan- sowie Carbodiimid/Uretonimin-Struktureinheiten, bevorzugt werden Polyisocyanate auf Basis aliphatischer und cycloaliphatischer Diisocyanate eingesetzt, stärker bevorzugt ist das mindestens eine Polyisocyanat A2 ausgewählt aus Hexamethylendiioscyanat, Pentamethylendiisocyanat und Isophorondiisocyanat.
7. Das 2-Komponenten-System gemäß einem der vorangehenden Gegenstände, dadurch gekennzeichnet, dass D2 ausgewählt ist aus
   i) mindestens einer Verbindung der Formel (II) 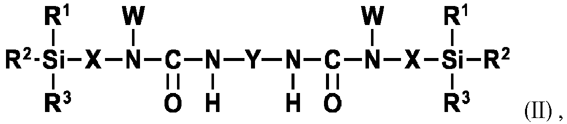 wobei
      R¹, R² und R³ jeweils unabhängig voneinander für gleiche oder verschiedene gesättigte oder ungesättigte, lineare oder verzweigte, aliphatische oder cycloaliphatische oder gegebenenfalls substituierte aromatische oder araliphatische Reste mit bis zu 18 Kohlenstoffatomen, die gegebenenfalls bis zu 3 Heteroatome aus der Reihe Sauerstoff, Schwefel, Stickstoff enthalten können, vorzugsweise jeweils Alkylreste mit bis zu 6 Kohlenstoffatomen und/oder Alkoxyreste mit bis zu 6 Kohlenstoffatomen, die bis zu 3 Sauerstoffatome enthalten können, besonders bevorzugt jeweils Methyl, Methoxy und/oder Ethoxy stehen, mit der Maßgabe, dass mindestens einer der Reste R¹, R² und R³ über ein Sauerstoffatom mit dem Siliziumatom verbunden ist,
      X für einen linearen oder verzweigten organischen Rest mit bis zu 6, vorzugsweise für einen linearen Alkylrest mit 1 bis 4 Kohlenstoffatomen, besonders bevorzugt für einen Propylenrest (-CH₂-CH₂-CH₂-) steht und
      Y für einen linearen oder verzweigten, aliphatischen oder cycloaliphatischen Rest mit 4 bis 18 Kohlenstoffatomen.
      W unabhängig voneinander für eine Formyl- oder Acetylgruppe oder auch eine COO-Gruppe mit einem Rest G stehen, G kann dabei mono-, di-,tri- oder tetrafunktionell sein und steht für einen linearen oder verzweigten, aliphatischen oder cycloaliphatischen Rest oder eine davon abgeleitete, verbindende Einheit mit 4 bis 18 Kohlenstoffatomen oder einem gegebenenfalls substituierten aromatischen oder araliphatischen Rest stehen; und/oder
   ii) mindestens einer Verbindung der Formel (III) 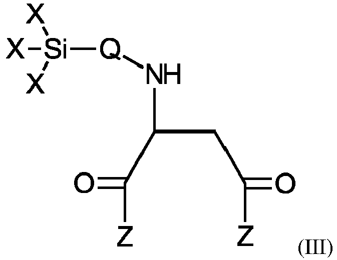 wobei
      - X: jeweils unabhängig ausgewählt ist aus Alkoxy- oder Alkylresten, oder zwei Reste X mit dem Siliziumatom, an das sie gebunden sind einen Si substituierten Kohlenwasserstoffring bilden, mit jeweils bis zu 10 Kohlenstoffatomen, mit der Maßgabe, dass das Si-Atom mindestens einen Alkoxyrest aufweist,
      - Q: ein difunktioneller linearer oder verzweigter aliphatischer Rest mit bis zu 10 Kohlenstoffatomen ist, bevorzugt -CH₂- oder -(CH₂)₃- ist, insbesondere -(CH₂)₃- ist; und
      - Z: jeweils ein Alkoxyrest mit 1 bis 10 Kohlenstoffatomen ist.
8. Das 2-Komponenten-System gemäß einem der vorangehenden Gegenstände, dadurch gekennzeichnet, dass B2 bevorzugt einen Isocyanatgehalt von kleiner als 2%, stärker bevorzugt einen Isocyanatgehalt von kleiner als 1% aufweist.
9. Das 2-Komponenten-System gemäß einem der vorangehenden Gegenstände, dadurch gekennzeichnet, dass die Bestandteile der ersten Komponente Gew.-Teile A1 und Gew.-Teile B1 im Verhältnis zu den Bestandteilen Gew.-Teile C1 und Gew.-Teile Dl, bevorzugt in einem Gewichtsverhältnis von 0,5 bis 8 vorliegen, stärker bevorzugt in einem Gewichtsverhältnis von 0,8 bis 4, vorliegen.
10. Das 2-Komponenten-System gemäß einem der vorangehenden Gegenstände, dadurch gekennzeichnet, dass die Bestandteile der zweiten Komponente Gew.-Teile A2 und Gew.-Teile B2 zu den Bestandteilen Gew.-Teile C2 und Gew.-Teile D2 in einem Gewichtsverhältnis von 0,5 bis 10, stärker bevorzugt in einem Gewichtsverhältnis von 1 zu 8, vorliegen.
11. Das 2-Komponenten-System gemäß einem der vorangehenden Gegenstände, dadurch gekennzeichnet, dass die Bestandteile der ersten Komponente Gew.-Teile A1, und gegebenenfalls Gew.-Teile B1, Gew.-Teile C1 und Gew.-Teile D1 zu den Bestandteilen der zweiten Komponente, Gew.-Teile A2, Gew.-Teile B2 und gegebenenfalls Gew.-Teile C2 und Gew.-Teile D2 in einem Gewichtsverhältnis von 0,6 bis 11 vorliegen, stärker bevorzugt in einem Gewichtsverhältnis von 0,8 bis 8 vorliegen.
12. Verfahren zur Herstellung von Silizium haltigen Polyurethanen, umfassend das Umsetzen der ersten Komponente mit der zweiten Komponente des 2-Komponenten-Systems gemäß der vorliegenden Erfindung.
13. Silizium haltige Polyurethane erhältlich durch das Verfahren gemäß Gegenstand 12.
14. Verwendung des 2-Komponenten-Systems gemäß der vorliegenden Erfindung zur Herstellung von Lack, Dicht- oder Klebstoffen.

Das 2-Komponenten-System enthält eine erste Komponente, welche mindestens eine Verbindung mit mindestens einer Zerewitinoff-aktiven Gruppe enthält im Folgenden auch als Verbindung A1 bezeichnet.

Für diese Verbindung sind alle dem Fachmann bekannten Verbindungen, welche mindestens eine NCO-reaktive Gruppe mit mindestens einer Zerewitinoff-aktiven Gruppe enthalten geeignet. Besonders geeignete Verbindungen weisen eine mittlere OH- bzw. NH-Funktionalität von mindestens 1,5 auf. Dies können beispielsweise Diole (z.B. 1,2-Ethandiol, 1,3- bzw. 1,2-Propandiol, 1,4-Butandiol), Triole (z.B. Glycerin, Trimethylolpropan) und Tetraole (z.B. Penterythrit) sein, Polyamine aber auch Polyhydroxyverbindungen wie Polyetherpolyole, Polyesterpolyole, Polyurethanpolyole, Polysiloxanpolyole, Polycarbonatpolyole, Polyetherpolyamine, Polybutadienpolyole, Polyacrylatpolyole und/oder Polymethacrylatpolyole sowie deren Mischpolymerisate, im folgenden Polyacrylatpolyole genannt.

In einer bevorzugten Ausführungsform ist die Verbindung A1 eine Polyhydroxyverbindung. Die Polyhydroxyverbindungen weisen bevorzugt gewichtsmittlere Molekulargewichte Mw > 500 g/mol, gemessen mittels Gelpermeationschromatographie (GPC) gegen einen Polystyrolstandard, besonders bevorzugt zwischen 800 und 100.000 g/mol, insbesondere zwischen 1.000 und 50.000 g/mol auf. Die Polyhydroxyverbindungen weisen bevorzugt eine OH-Zahl von 30 bis 400 mg KOH/g, insbesondere zwischen 100 und 300 KOH/g, auf. Die Hydroxylzahl (OH-Zahl) gibt an, wie viel mg Kaliumhydroxid der Essigsäuremenge äquivalent sind, die von 1 g Substanz bei der Acetylierung gebunden wird. Die Probe wird bei der Bestimmung mit Essigsäureanhydrid-Pyridin gekocht und die entstehende Säure mit Kaliumhydroxidlösung titriert (DIN 53240-2 2:2007-11).

Die Glasübergangstemperaturen, gemessen mit Hilfe von DSC-Messungen nach DIN-EN- ISO 11357-2-2:2014-07, der Polyhydroxyverbindungen liegen bevorzugt zwischen -150 und 100 °C, besonders bevorzugt zwischen -120 °C und 80 °C. Polyetherpolyole sind in an sich bekannter Weise durch Alkoxylierung von geeigneten Starter-Molekülen unter Basenkatalyse oder Einsatz von Doppelmetallcyanidverbindungen (DMC-Verbindungen) zugänglich. Geeignete Starter-Moleküle für die Herstellung von Polyetherpolyolen sind beispielsweise einfache, niedermolekulare Polyole, Wasser, organische Polyamine mit mindestens zwei N-H-Bindungen oder beliebige Gemische derartiger Starter-Moleküle.

Bevorzugte Starter-Moleküle zur Herstellung von Polyetherpolyolen durch Alkoxylierung, insbesondere nach dem DMC-Verfahren, sind insbesondere einfache Polyole wie Ethylenglykol, Propylenglykol-1,3 und Butandiol-1,4, Hexandiol-1,6, Neopentylglykol, 2- Ethylhexandiol-1,3, Glyzerin, Trimethylolpropan, Penterythrit sowie niedermolekulare, Hydroxylgruppen aufweisende Ester derartiger Polyole mit Dicarbonsäuren der nachstehend beispielhaft genannten Art oder niedermolekulare Ethoxylierungs- oder Propoxylierungsprodukte derartiger einfacher Polyole oder beliebige Gemische derartiger modifizierter oder nicht modifizierter Alkohole. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt werden können.

Geeignete Polyesterpolyole sind beispielsweise in EP-A-0 994 1 17 und EP-A-1 273 640 beschrieben. Polyesterpolyole können in bekannter Weise durch Polykondensation von niedermolekularen Polycarbonsäurederivaten, wie beispielsweise Bernsteinsäure, Adipinsäure, Korksäure, Azelainsäure, Sebacinsäure, Dodekandisäure, Tetrahydrophthalsäureanhydrid, Hexahydrophthalsäureanhydrid, Tetrachlorphthal- säureanhydrid, Endomethylentetrahydrophthalsäureanhydrid, Glutarsäureanhydrid, Maleinsäure, Maleinsäureanhydrid, Fumarsäure, Dimerfettsäure, Trimerfettsäure, Phthalsäure, Phthalsäureanhydrid, Isophthalsäure, Terephthalsäure, Zitronensäure oder Trimellithsäure, mit niedermolekularen Polyolen, wie beispielsweise Ethylenglykol, Diethylenglykol, Neopentylglykol, Hexandiol, Butandiol, Propylenglykol, Glycerin, Trimethylolpropan, 1,4-Hydroxymethylcyclohexan, 2-Methyl-1,3-propandiol, Butantriol- 1,2,4, Triethylenglykol, Teträthylenglykol, Polyethylenglykol, Dipropylenglykol, Polypropylenglykol, Dibutylenglykol und Polybutylenglykol, oder durch Ring-öffnende Polymerisation cyclischer Carbonsäureester, wie e-Caprolacton, hergestellt werden. Darüber hinaus lassen sich auch Hydroxycarbonsäurederivate, wie beispielsweise Milchsäure, Zimtsäure oder Hydroxycapronsäure zu Polyesterpolyolen polykondensieren. Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefmisch ungesättigten Fettsäureenthaltenden Fettgemisches mit einem oder mehreren Alkoholen mit 1 bis 12 C- Atomen und durch anschließende partielle Umesterung der Triglycerid-Derivate zu Alkylesterpolyolen mit 1 bis 12 C-Atomen im Alkylrest hergestellt werden.

Geeignete Polyurethanpolyole werden vorzugsweise durch Umsetzung von Polyesterpolyol-Präpolymeren mit geeigneten Di- oder Polyisocyanaten hergestellt und sind beispielsweise in EP-A-1 273 640 beschrieben. Geeignete Polysiloxanpolyole sind beispielsweise in der WO- A-01/09260 beschrieben, wobei die dort angeführten Polysiloxanpolyole bevorzugt in Kombination mit weiteren Polyhydroxyverbindungen, insbesondere solchen mit höheren Glasübergangstemperaturen, zum Einsatz kommen können. Die erfindungsgemäß ganz besonders bevorzugten Polyacrylatpolyole sind in der Regel Copolymerisate und weisen vorzugsweise gewichtsmittlere Molekulargewichte Mw zwischen 1.000 und 20.000 g/mol, insbesondere zwischen 1.500 und 10.000 g/mol auf, jeweils gemessen mittels Gelpermeationschromatographie (GPC) gegen einen Polystyrolstandard. Die Glasübergangstemperatur der Copolymerisate liegt in der Regel zwischen -100 und 100 °C, insbesondere zwischen -50 und 80 °C (gemessen mittels DSC-Messungen nach DIN-EN- ISO 11357-2-2:2014-07).

Bevorzugte Poly(meth)acrylatpolyole weisen eine OH-Zahl von 60 bis 250 mg KOH/g, insbesondere zwischen 70 und 200 mg KOH/g, sowie eine Säurezahl zwischen 0 und 30 mg KOH/g, auf. Die Säurezahl gibt hierbei die Anzahl der mg Kaliumhydroxid an, die zur Neutralisation von 1 g der jeweiligen Verbindung verbraucht wird (DIN EN ISO 21 14).

Die Herstellung geeigneter Poly(meth)acrylatpolyole ist dem Fachmann an sich bekannt. Sie werden durch radikalische Polymerisation von Hydroxylgruppen aufweisenden, oleochemisch ungesättigten Monomeren oder durch radikalische Copolymerisation von Hydroxylgruppen aufweisenden, oleochemisch ungesättigten Monomeren mit gegebenenfalls anderen oleochemisch ungesättigten Monomeren, wie z.B. Ethylacrylat, Ethylmethacrylat, Propylacrylat, Propylmeth acrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclopentylacrylat, Cyclopentylmethacrylat, Isobornylacrylat, Isobornylmethacrylat oder insbesondere Cyclohexylacrylat und/oder Cyclohexylmethacrylat. erhalten. Geeignete Hydroxylgruppen aufweisende, olefmisch ungesättigte Monomere sind insbesondere 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat sowie insbesondere 4- Hydroxybutylacrylat und/oder 4-Hydroxybutylmethacrylat.

Als weitere Monomerbausteine für die Polyacrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

Bevorzugte Poly(meth)acrylatpolyole ist mindestens ein difunktionelles polymeres Polyol mit einem zahlenmittleren Molekulargewicht laut GPC (in g/mol), entsprechend DIN 55672:2016-03 bestimmt, im Bereich von 270 bis 22000 g/mol, bevorzugt von 500 bis 18000 g/mol, besonders bevorzugt von 800 bis 12000 g/mol.

Die erste Komponente kann ferner mindestens einen Katalysator enthalten, welcher geeignet ist die Reaktion der ersten Komponente mit der zweiten Komponente zu katalysieren. Solche Katalysatoren sind dem Fachmann bekannt. Geeignet sind Zinnkatalysatoren, Bismutkatalysatoren, Zinkkatalysatoren, Zirkoniumkatlaysatoren und Aminbasen.

Insbesondere geeignet sind beispielsweise Zinkverbindungen, wie z. B. Zink (II)-stearat, Zink-(II)-n-octanoat, Zink-(II)-2-ethyl-1-hexanoat, Zink-(II)-naphthenat, Zinkchlorid, Zink-2-ethylcaproat oder Zink-(II)-acetylacetonat, Zinnverbindungen, wie z. B. Zinn-(II)-n-octanoat, Zinn-(II)-2-ethyl-1-hexanoat, Zinn-(II)-laurat, Dibutylzinnoxid, Dibutylzinndichlorid, Dibutylzinndiacetat, Zinn(II)-ethylcaproat, Di-butylzinn-(IV)-dilaurat, Dibutylzinndimaleat oder Dioctylzinndiacetat, Zirconiumverbindungen, wie z. B. Zirconium-(IV)-2-ethyl-1-hexanoat, Zirconium-(IV)-isopropylat, Zirkonium-(IV)-n-butylat, Zirkonium-(IV)-2-ethylhexanoat, Zirkonyloctanoat, Zirconium-(IV)-neodecanoat, Zirconium-(IV)-naphthenat oder Zirconium-(IV)-acetylacetonat, Bismut(III)-2-ethylhexanoat und Bismut(III)-octoat.

Der Katalysator wird bevorzugt in Mengen von 0,01 bis 0,5 Gew.-% eingesetzt, stärker bevorzugt in Mengen von 0,03 bis 0,3 Gew.-%, bezogen auf das Gesamtgewicht der Verbindung A1 der ersten Komponente und A1 und B1 der zweiten Komponente.

Die erste Komponente kann bevorzugt ferner mindestens ein Lösungsmittel enthalten. Dabei sind generell alle dem Fachmann auf dem Gebiet bekannten Lösungsmittel geeignet. Insbesondere geeignet sind aromatisch und aliphatische Lösungsmittel, bevorzugt ausgewählt aus Butylacetat, 1-Methoxy-2-propylacetat, 3-Methoxy-1-butylacetat, Ethylacetat, dibasischer Ester, Propylen-n-Butylether, Methylethylketon, Toluol, Xylol, Solvent Naphta (Kohlenwasserstoffgemisch) sowie deren Mischungen.

Das Lösungsmittel ist bevorzugt in 30 bis 90 Gew.-%, besonders bevorzugt in 45 bis 70 Gew.-%, basierend auf dem Gesamtgewicht der ersten Komponente enthalten.

Die erste Komponente kann ferner optional mindestens ein Additiv enthalten. Dabei sind generell alle dem Fachmann auf dem Gebiet bekannten Additive geeignet. Bevorzugt sind dabei UV-Stabilisatoren, Antioxidantien, Verlaufsmittel, Füllstoffe und/oder Pigmente.

Geeignete UV-Stabilisatoren können vorzugsweise ausgewählt werden aus der Gruppe, bestehend aus Piperidinderivaten, wie z.B. 4-Benzoyloxy-2,2,6,6-tetramethylpiperidin, 4-Benzoyloxy-1,2,2,6,6-pentamethylpiperidin, Bis-(2,2,6,6-tetra-methyl-4-piperidyl)-sebacat, Bis(1,2,2,6,6-pentamethyl-1-4-piperidinyl)-sebacat, Bis-(2,2,6,6-tetramethyl-4-piperidyl)-su-berat, Bis-(2,2,6,6-tetramethyl-4-piperidyl)-dodecandioat; Benzophenonderivaten, wie z.B. 2,4-Dihydroxy-, 2-Hydroxy-4-methoxy-, 2-Hydroxy-4-octoxy-, 2-Hydroxy-4-dodecyloxy- oder 2,2'-Dihydroxy-4-dodecyloxy-benzophenon; Benztriazolderivaten, wie z.B. 2-(2H-Benzotriazol-2-yl)-4,6-di-tert-pentylphenol, 2-(2H-Benzotriazol-2-yl)-6-dodecyl-4-methylphenol, 2-(2H-Benzotriazol-2-yl)-4,6-bis(1-methyl-1-phenylethyl)phenol, 2-(5-Chlor-2H-benzotriazol-2-yl)-6-(1,1-dimethylethyl)-4-methylphenol, 2-(2H-benzotriazol-2-yl)-4-(1,1,3,3-tetramethylbutyl)phenol, 2-(2H-Benzotriazol-2-yl)-6-(1-methyl-1-phenylethyl)-4-(1,1,3,3-tetramethylbutyl)phenol, Isooctyl-3-(3-(2H-benzotriazol-2-yl)-5-(1,1-dimethylethyl)-4-hydroxyphenylpropionat), 2-(2H-Benzotriazol-2-yl)-4,6-bis(1,1-dimethylethyl)phenol, 2-(2H-Benzotriazol-2-yl)-4,6-bis(1-methyl-1-phenylethyl)phenol, 2-(5-Chlor-2H-benzotriazol-2-yl)-4,6-bis(1,1-dimethylethyl)phenol; Oxalaniliden, wie z.B. 2-Ethyl-2'-ethoxy- oder 4-Methyl-4'-methoxyoxalanilid; Salicylsäureestern, wie z.B. Salicylsäurephenylester, Salicylsäure-4-tert-butylphenylester, Salicylsäure-4-tert-octylphenylester; Zimtsäureesterderivaten, wie z.B. α-Cyano-β-methyl-4-methoxyzimtsäuremethylester, α-Cyano-β-methyl-4-methoxyzimtsäurebutylester, α-Cyano-β-phenylzimtsäureethylester, α-Cyano-β-phenylzimtsäureisooctylester; und Malonesterderivaten, wie z.B. 4-Methoxybenzylidenmalonsäuredimethylester, 4-Methoxybenzylidenmalonsäurediethylester, 4-Butoxybenzylidenmalonsäuredimethylester. Diese bevorzugten UV-Stabilisatoren können sowohl einzeln als auch in beliebigen Kombinationen untereinander zum Einsatz kommen. Besonders bevorzugte UV-Stabilisatoren sind unter den Handelsnamen Tinuvin 292 und Tinuvin 1130 der Firma BASF erhältlich.

Bevorzugte UV-Absorber sind DL-Alpha-Tocopherol, Tocopherol, Zimtsäurederivate und Cyanoacrylate.

Als geeignete UV-Absorber dienen ebenfalls sterisch gehinderte Amine (oft auch als HALS- oder HAS-Verbindung bezeichnet; Hindered Amine (Light) Stabilizer) wie 2,2,6,6-Tetramethylpiperidin, 2,6-Di-tert-butylpiperidin oder deren Derivaten, z.B. Bis-(2,2,6,6-tetramethyl-4-piperidyl)sebacinat. Diese sind z.B. erhältlich als Tinuvin®- und Chimaassorb®-Marken der BASF SE. N-alkylierte Radikalfänger sind beispielsweise Bis(1,2,2,6,6-pentamethyl-4-piperidinyl)-[[3,5-bis(1,1-dimethylethyl)-4-hydroxyphenyl]methyl]butylmalonat (z.B. Tinuvin® 144 der BASF); eine Mischung aus Bis(1,2,2,6,6-Pentamethyl-4-Piperidinyl)sebacat und Methyl(1,2,2,6,6-Pentamethyl-4-Piperidinylsebacat (z.B. Tinuvin 292 der BASF SE); oder die N-(o-alkyliert) sind, wie z.B. Dekandisäure-bis-(2,2,6,6,-tetramethyl-1-(octyloxy)-4-piperidinyl)-ester, Reaktionsprodukte mit 1,1-Dimethylethylhydroperoxid und Oktan (z.B. Tinuvin® 123 der BASF SE), und speziell dem HALS-Triazin "2-Aminoethanol, Reaktionsprodukte mit Cyclohexan und peroxidiertem N-butyl-2,2,6,6-tetramethyl-4piperidinamine-2,4,6-trichloro- 1,3,5-triazin Reaktionsprodukt" (z.B. Tinuvin® 152 der BASF SE).

Gegebenenfalls werden ein oder mehrere der beispielhaft genannten UV-Stabilisatoren der ersten Komponente vorzugsweise in Mengen von 0,0001 bis 3,0 Gew.-%, besonders bevorzugt 0,001 bis 2 Gew.-%, in Bezug auf das Gesamtgewicht der Verbindung A1 der ersten Komponente und der Verbindung A2 und B2 der zweiten Komponente eingesetzt.

Weitere geeignete Antioxidantien sind vorzugsweise sterisch gehinderten Phenole, welche vorzugsweise ausgewählt werden können aus der Gruppe, bestehend aus 2,6-Di-tert-butyl-4-methylphenol (Ionol), Pentaerythrit-tetrakis(3-(3,5-di-tert-butyl-4-hydroxy-phenyl)-propionat), Octadecyl-3-(3,5-di-tert-butyl-4-hydroxyphenyl)-propionat, Triethylen-glykol-bis(3-tert-butyl-4-hydroxy-5-methylphenyl)propionat, 2,2'-Thio-bis(4-methyl-6-tert-butylphenol) und 2,2'-Thio-diethyl-bis[3-(3,5-di-tert-butyl-4-hydroxyphenyl)propionat]. Diese können bei Bedarf sowohl einzeln als auch in beliebigen Kombinationen untereinander eingesetzt werden.

Antioxidantien werden vorzugsweise in Mengen von 0,001 bis 3,0 Gew.-%, besonders bevorzugt 0,02 bis 2,0 Gew.-%, berechnet als Gesamtmenge an eingesetzten Antioxidantien in Bezug auf das Gesamtgewicht der Verbindung A1 der ersten Komponente und der Verbindung A2 und B2 der zweiten Komponente eingesetzt.

Zur Verbesserung der Substratbenetzung können gegebenenfalls geeignete Verlaufsmittel, beispielsweise organisch modifizierte Siloxane, wie z. B. Polyether-modifizierte Siloxane, Polyacrylate und/oder Fluortenside, enthalten sein. Diese Verlaufsmittel kommen bevorzugt in Mengen von 0,01 Gew.-% bis zu 3 Gew.-%, vorzugsweise von 0,01 Gew.-% bis zu 2 Gew.-%, besonders bevorzugt von 0,05 bis 1,5 Gew.-%, berechnet als Gesamtmenge an eingesetzten Verlaufsmitteln in Bezug auf das Gesamtgewicht der Verbindung A1 der ersten Komponente vor. Bevorzugte Verlaufsmittel sind kommerziell unter dem Handelsnamen BYK 141 und BYK 311 der Firma Altana erhältlich.

Die zweite Komponente umfasst mindestens ein Polyisocyanat.

Als Polyisocyanat können hier prinzipiell alle dem Fachmann für die Herstellung von Polyisocyanat-Polyadditionsprodukten, insbesondere Polyurethanen, als geeignet bekannte Polyisocyanate zum Einsatz kommen, insbesondere die Gruppe der organischen aliphatischen, cycloaliphatischen, araliphatischen und/oder aromatischen Polyisocyanate mit mindestens zwei Isocyanatgruppen pro Molekül sowie Gemische davon. Beispiele für derartige Polyisocyanate sind Di- oder Triisocyanate, wie z.B. 1,4-Butandiisocyanat, 1,5- Pentandiisocyanat (Pentamethylendiisocyanat, PDI), 1,6-Hexandiisocyanat (Hexamethylendiisocyanat, HDI), 4-Isocyanatomethyl-1,8-octandiisocyanat (Triisocyanatononan, TIN), 4,4'-Methylenbis(cyclohexylisocyanat) (H₁₂MDI), 3,5,5-Tri- methyl-1-isocyanato-3-isocyanatomethylcyclohexan (Isophorondiisocyanat, IPDI), 1,3- sowie 1,4-Bis(isocyanatomethyl)cyclohexan (HfrXDI), 1,5-Naphthalindiisocyanat, Diisocyanatodiphenylmethan (2,2'-, 2,4'- und 4,4'-MDI oder Mischungen daraus), Diisocyanatomethylbenzol (2,4- und 2,6-Toluylendiisocyanat, TDI) und technische Gemische der beiden Isomeren sowie 1,3- und/oder 1,4-Bis(isocyanatomethyl)benzol (XDI), 3,3'-Dimethyl-4,4'-biphenyldiisocyanat (TODI), 1,4-Paraphenylendiisocyanat (PPDI) sowie Cyclohexyldiisocyanat (CHDI) und die aus vorgenannten, einzeln oder in Mischung erhältlichen, höhermolekularen Oligomeren mit Biuret-, Uretdion-, Isocyanurat-, Iminooxadiazindion-, Allophanat-, Urethansowie Carbodiimid/Uretonimin-Struktüreinheiten. Bevorzugt werden Polyisocyanate auf Basis aliphatischer und cycloaliphatischer Diisocyanate eingesetzt.

Bevorzugt ist das mindestens eine Polyisocyanat ausgewählt aus Di- oder Triisocyanaten, wie 1,4-Butandiisocyanat, Pentamethylendiisocyanat, Hexamethylendiisocyanat, 4-Isocyanatomethyl-1,8-octandiisocyanat, 4,4'-Methylenbis(cyclohexylisocyanat), 1,-10-Decamethylendiisocyanat, 3,5,5-Tri-methyl-1-isocyanato-3-isocyanatomethylcyclohexan, 1,3- sowie 1,4-Bis(isocyanatomethyl)cyclohexan, Isophorondiisocyanat, 1,5-Naphthalindiisocyanat, Diisocyanatodiphenylmethan, wie 2,2'-, 2,4'- und 4,4'-MDI oder Mischungen daraus, Diisocyanatomethylbenzol, wie 2,4- und 2,6-Toluylendiisocyanat, und technische Gemische der beiden Isomeren sowie 1,3- und/oder 1,4-Bis(isocyanatomethyl)benzol, 3,3'-Dimethyl-4,4'-biphenyldiisocyanat, 1,4-Paraphenylendiisocyanat sowie Cyclohexyldiisocyanat und die aus vorgenannten, einzeln oder in Mischung erhältlichen, höhermolekularen Oligomeren mit Biuret-, Uretdion-, Isocyanurat-, Iminooxadiazindion-, Allophanat-, Urethan- sowie Carbodiimid/Uretonimin-Struktureinheiten, bevorzugt werden Polyisocyanate auf Basis aliphatischer und cycloaliphatischer Diisocyanate eingesetzt, stärker bevorzugt ist das mindestens eine Polyisocyanat A2 ausgewählt aus Hexamethylendiioscyanat, Pentamethylendiisocyanat und Isophorondiisocyanat.

Ferner enthält die zweite Komponente mindestens eine Verbindung der Formel (I) 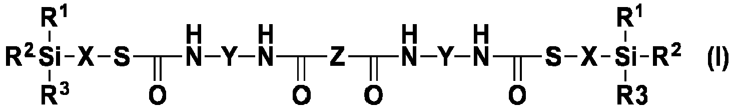 wobei
R¹ bis R³ jeweils unabhängig voneinander für gleiche oder verschiedene gesättigte oder ungesättigte, lineare oder verzweigte, aliphatische oder cycloaliphatische oder gegebenenfalls substituierte aromatische oder araliphatische Reste mit bis zu 18 Kohlenstoffatomen, die gegebenenfalls bis zu 3 Heteroatome aus der Reihe Sauerstoff, Schwefel, Stickstoff enthalten können, vorzugsweise jeweils Alkylreste mit bis zu 6 Kohlenstoffatomen und/oder Alkoxyreste mit bis zu 6 Kohlenstoffatomen, die bis zu 3 Sauerstoffatome enthalten können, besonders bevorzugt jeweils Methyl, Methoxy und/oder Ethoxy stehen, mit der Maßgabe, dass mindestens einer der Reste R¹, R² und R³ über ein Sauerstoffatom mit dem Siliziumatom verbunden ist,
X jeweils unabhängig voneinander für gleiche oder verschiedene gesättigte oder ungesättigte, lineare oder verzweigte, aliphatische oder cycloaliphatische oder gegebenenfalls substituierte aromatische oder araliphatische Reste mit bis zu 6 Kohlenstoffatomen, vorzugsweise lineare Alkylreste mit 1 bis 4 Kohlenstoffatomen stehen, besonders bevorzugt für einen Propylenrest (-CH₂-CH₂-CH₂-) steht;
Y jeweils unabhängig voneinander für gleiche oder verschiedene gesättigte oder ungesättigte, lineare oder verzweigte, aliphatische oder cycloaliphatische oder gegebenenfalls substituierte aromatische oder araliphatische Reste mit bis zu 18 Kohlenstoffatomen, die gegebenenfalls bis zu 3 Heteroatome aus der Reihe Sauerstoff, Schwefel, Stickstoff enthalten können, stehen, bevorzugt ausgewählt aus Isophoronyl, Pentamethylen, Hexamethylen, Biscylohexylmethylen, Toluidenyl oder Methylendiphenylen; und
Z für eine Struktureinheit steht, die von einem mindestens difunktionellen Polyol abgeleitet ist, das ein zahlenmittleres Molekulargewicht Mₙ von 270 bis 22000 g/mol, bevorzugt von 500 bis 18000 g/mol und besonders bevorzugt von 800 bis 12000 g/mol aufweist;
   oder
   für einen mehrwertigen Alkohol und/oder Ether- oder Esteralkohol steht, der 2 bis 14 Kohlenstoffatome, bevorzugt 4 bis 10 Kohlenstoffatome enthält.

Geeignete und bevorzugte difunktionelle Polyole von denen sich die Struktureinheit Z in der Formel (I) ableiten kann, sind die bereits oben im Text beschriebenen (polymeren) Polyole, wobei die gleichen Bevorzugungen gelten. Geeignete und bevorzugten Polyole und daraus erhaltene silanfunktionelle Prepolymere sind die in der WO 2018/029197 A1 offenbarten Polyole, die sich vorzugsweise nach den dort beschriebenen Verfahren herstellen lassen.

Alternativ zur vorstehenden Definition von Z in der Formel (I) steht Z nach einer weiteren Ausführungsform für eine Struktureinheit, die von einem mehrwertigen Alkohol und/oder Ether-oder Esteralkohol als Polyol abgeleitet ist, der 2 bis 14 Kohlenstoffatome, bevorzugt 4 bis 10 Kohlenstoffatome enthält.

Alternativ zur vorstehenden Definition von Z in der Formel (I) geeignete solcher auch als niedermolekular bezeichneter Polyole sind mehrwertige Alkohole und/oder Ether- oder Esteralkohole wie beispielsweise 1,2-Ethandiol, 1,2- und 1,3-Propandiol, die isomeren Butandiole, Pentandiole, Hexandiole, Heptandiole und Octandiole, 1,10-Decandiol, 1,12-Dodecandiol, 1,2- und 1,4-Cyclohexandiol, 1,4-Cyclohexandimethanol, 1,4-Bis(2-hydroxyethoxy)-benzol, 2,2-Bis-(4-hydroxyphenyl)-propan (Bisphenol A), 2,2-Bis-(4-hydroxycyclohexyl)-propan (Perhydrobisphenol), 1,2,3-Propantriol, 1,2,4-Butantriol, 1,1,1-Trimethylolethan, 1,2, 6-Hexantriol, 1,1,1-Trimethylolpropan (TMP), Bis-(2-hydroxyethyl)-hydrochinon, 1,2,4- und 1,3,5-Trihydroxycyclohexan, 1,3,5-Tris(2-hydroxyethyl)-isocyanurat, Bis (hydroxymethyl)-tricyclo[5.2.1.02'6]-decan, 4,8-Bis(hydroxymethyl)tricyclo-[5.2.1.02,6]-decan und 5,8-Bis(hydroxymethyl)-tricyclo-[5.2.1.0']-decan enthaltend, wobei die Verbindungen einzelnen oder in einem Isomerengemisch vorliegen können. Di-Trimethylolpropan, 2,2-Bis(hydroxymethyl)-1,3-propandiol (Pentaerythrit), 2,2,6,6-Tetrakis(hydroxymethyl)-4-oxa-heptan-1, 7-diol (Dipentaerythrit), Mannitol oder Sorbitol, niedermolekulare Etheralkohole, wie z. B. Diethylenglykol, Triethylenglykol, Tetraethylenglykol, Dipropylenglykol oder Dibutylenglykol oder niedermolekulare Esteralkohole, wie z. B. Hydroxypivalinsaureneopentylglykolester.

Bevorzugte Beispiele für solche Isocyanatosilane mit Thiourethanstruktur sind die Umsetzungsprodukte von 2-Mercaptoethyltrimethoxylsilan, 2-Mercaptoethylmethyldimethoxysilan, 2-Mercaptoethyltrimethoxysilan, 2-Mercaptoethyltriethoxysilan, 3-Mercaptopropylmethyldimethoxysilan, 3-Mercaptopropyldimethylmethoxysilan, 3-Mercaptopropyltrimethoxysilan, 3-Mercaptopropylmethyldiethoxysilan, 3-Mercaptopropylethyldimethoxysilan, 3-Mercaptopropylethyldiethoxysilan und/oder 4-Mercaptobutyltrimethoxysilan mit 1,5-Diisocyanatopentan, 1,6-Diisocyanatohexan, 1-Isocyanato-3,3,5-trimethyl-5-isocyanatomethylcyclohexan, 2,4'- und/oder 4,4'-Diisocyanatodicyclohexylmethan oder beliebigen Gemischen dieser Diisocyanate.

Besonders bevorzugte Alkoxysilan-funktionelle Isocyanate der vorliegenden Erfindung sind Isocyanatomethyltrimethoxysilan, Isocyanatomethyltriethoxysilan, 3-Isocyanatopropyltrimethoxysilan und 3-Isocyanatopropyltriethoxysilan, die nach dem Verfahren der WO 2014/037279 A1 durch Umsetzung von 3-Mercaptopropyltrimethoxysilan und/oder 3-Mercaptopropyltriethoxysilan mit 1,5-Diisocyanatopentan, 1,6-Diisocyanatohexan, 1-Isocyanato-3,3,5-trimethyl-5-isocyanatomethylcyclohexan, 2,4'- und/oder 4,4'-Diisocyanatodicyclohexylmethan erhältlichen Isocyanatosilane mit Thiourethanstruktur sowie beliebige Gemische solcher Isocyanatosilane.

Ganz besonders bevorzugt ist die Verwendung der genannten Isocyanatosilane mit Thiourethanstruktur.

Ferner kann die zweite Komponente gegebenenfalls mindestens ein Lösungsmittel enthalten. Dabei sind die Lösungsmittel wie vorstehend für die erste Komponente ebenfalls geeignet. Ferner sind die bevorzugten Ausführungsformen für die erste Komponente ebenfalls für die zweite Komponente bevorzugt.

Die zweite Komponente kann gegebenenfalls mindestens eine Verbindung (D2), die von der Verbindung nach Formel (I) verschieden ist, und durch Umsetzung mindestens einer Isocyanatgruppe mit einem sekundären Amin, das eine Silangruppe enthält, erhalten wird, enthalten.

Bevorzugte Verbindungen für die Komponente D2 weisen die allgemeinen Formel (II) 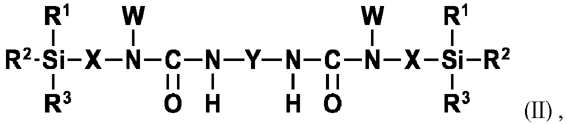 auf, wobei
- R¹, R² und R³: unabhängig voneinander für gleiche oder verschiedene gesättigte oder ungesättigte, lineare oder verzweigte, aliphatische oder cycloaliphatische oder gegebenenfalls substituierte aromatische oder araliphatische Reste mit bis zu 18 Kohlenstoffatomen, die gegebenenfalls bis zu 3 Heteroatome aus der Reihe Sauerstoff, Schwefel, Stickstoff enthalten können, vorzugsweise jeweils Alkylreste mit bis zu 6 Kohlenstoffatomen und/oder Alkoxyreste mit bis zu 6 Kohlenstoffatomen, die bis zu 3 Sauerstoffatome enthalten können, besonders bevorzugt jeweils Methyl, Methoxy und/oder Ethoxy bedeuten, mit der Maßgabe, dass mindestens einer der Reste R¹, R² und R³ über ein Sauerstoffatom mit dem Siliziumatom verbunden ist,
- X: für einen linearen oder verzweigten organischen Rest mit bis zu 6, vorzugsweise 1 bis 4 Kohlenstoffatomen, besonders bevorzugt für einen Propylenrest (-CH₂-CH₂-CH₂-) steht und
- Y: für einen linearen oder verzweigten, aliphatischen oder cycloaliphatischen Rest mit 4 bis 18 Kohlenstoffatomen oder einen gegebenenfalls substituierten aromatischen oder araliphatischen Rest mit 6 bis 18 Kohlenstoffatomen, bevorzugt für einen linearen oder verzweigten, aliphatischen oder cycloaliphatischen Rest mit 6 bis 13 Kohlenstoffatomen, steht und
- W: unabhängig voneinander für eine Formyl- oder Acetylgruppe oder auch eine COO-Gruppe mit einem Rest G steht, G kann dabei mono-, di-,tri- oder tetrafunktionell sein und steht für einen linearen oder verzweigten, aliphatischen oder cycloaliphatischen Rest oder eine davon abgeleitete, verbindende Einheit mit 4 bis 18 Kohlenstoffatomen oder einem gegebenenfalls substituierten aromatischen oder araliphatischen Rest oder eine davon abgeleitete, verbindende Einheit mit 6 bis 18 Kohlenstoffatomen, bevorzugt für einen linearen oder verzweigten, aliphatischen oder cyclolaliphatischen Rest mit 6 bis 13 Kohlenstoffatomen. Gegebenenfalls kann der Rest W ein oder mehrere Heteroatome ausgewählt aus der Gruppe Sauerstoff, Schwefel und Stickstoff enthält.

Alternativ geeignete Verbindungen (D2) werden durch Umsetzung mindestens einer Isocyanatgruppe mit einem sekundären Amin, das eine Silangruppe enthält, erhalten, wobei geeignete sekundäre Amine, die eine Silangruppe enthalten, beispielsweise Asparaginsäureester, wie sie in der EP-A-0 596 360 beschrieben werden, sind. Bei diesen Molekülen der allgemeinen Formel (III) 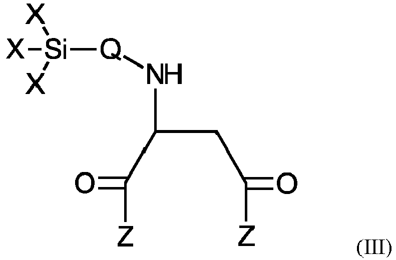 ist
- X: jeweils unabhängig ausgewählt aus Alkoxy- oder Alkylresten, oder zwei Reste X mit dem Siliziumatom, an das sie gebunden sind einen Si substituierten Kohlenwasserstoffring bilden, mit jeweils bis zu 10 Kohlenstoffatomen, mit der Maßgabe, dass das Si-Atom mindestens einen Alkoxyrest aufweist,
- Q: ein difunktioneller linearer oder verzweigter aliphatischer Rest mit bis zu 10 Kohlenstoffatomen ist, bevorzugt -CH₂- oder -(CH₂)₃- ist, insbesondere -(CH₂)₃-; und
- Z: jeweils ein Alkoxyrest mit 1 bis 10 Kohlenstoffatomen.

Die Verwendung von solchen Asparaginsäureestern ist bevorzugt. Beispiele für besonders bevorzugte Asparaginsäureester sind N-(3-Triethoxysilylpropyl)asparaginsäurediethylester, N-(3-Tri-methoxysilylpropyl)-asparaginsäurediethylester und N-(3-Dimethoxymethylsilylpropyl)-asparaginsäurediethylester. Ganz besonders bevorzugt ist die Verwendung von N-(3-Triethoxysilylpropyl)asparaginsäurediethylester.

Diese geeigneten und bevorzugten sekundären Amine, die eine Silangruppe enthalten, können mit beliebigen Polyisocyanaten zu den Polyharnstoffprepolymeren (D2) umgesetzt werden. Bevorzugt sind aus Verbindungen der Formel (III) hergestellte Polyharnstoffprepolymere (D2), wie sie in EP-A-0 994 117 beschrieben und hergestellt werden.

Die erste und die zweite Komponente werden bevorzugt im NCO-OH Verhältnis von 1:1,2 bis 1,2:1, insbesondere 1:1 umgesetzt.

Den erfindungsgemäßen Silangruppen enthaltenden Polyurethanen können bei der Formulierung von Lacken, Dichtstoffen oder Klebstoffen auch beliebige weitere übliche Hilfs- und Zusatzmittel, wie z. B. UV-Stabilisatoren (siehe oben), Antioxidantien (siehe oben), Wasserfänger, Slipadditive, Entschäumer, Verlaufsmittel, Rheologieadditive, Flammschutzmittel, Füllstoffe und/oder Pigmente, zugesetzt werden. Neben der Verwendung als Alleinbindemittel können die erfindungsgemäßen Verfahrensprodukte, beispielsweise zur Erzielung ganz spezieller Eigenschaften, wie z. B. zur Haftverbesserung, auch üblichen 1K- oder 2K-Polyurethansystemen, beispielsweise als Additiv, zugemischt werden.

Die Applikation der unter Verwendung der erfindungsgemäßen Silangruppen enthaltenden Polyurethan-formulierten Beschichtungen, Lacke, Dichtstoffe oder Klebstoffe kann nach an sich bekannten Methoden erfolgen, beispielsweise durch Spritzen, Streichen, Tauchen, Fluten oder mit Hilfe von Walzen oder Rakeln in einer oder mehrerer Schichten. Als Untergründe kommen dabei beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Ein weiterer Gegenstand der Erfindung sind daher die mit erfindungsgemäßen Silangruppen enthaltenden Polyurethanen beschichteten vorstehend genannten Untergründe.

Die Beschichtungen werden bevorzugt in einem Temperaturbereich von 0 °C bis 120 °C appliziert, stärker bevorzugt zwischen 15 °C und 90 °C.

Durch das Umsetzen des 2-Komponenten-Systems wird ein Silizium haltiges Polyurethan erhalten.

### Beispiele

Die nachfolgenden Beispiele dienen zur Verdeutlichung der vorliegenden Erfindung, sollen aber keinesfalls als Einschränkung des Schutzbereichs verstanden werden.

Alle Prozentangaben beziehen sich, soweit nichts anderes angegeben wird, auf das Gewicht.

Alle Versuche wurden bei 23 °C und 50% relativer Feuchtigkeit durchgeführt.

Die Bestimmung der NCO-Gehalte erfolgte titrimetrisch nach DIN EN ISO 11909:2007-05.

Der Festkörpergehalt wurde nach DIN EN ISO 3251:2008-06 bestimmt.

Sämtliche Viskositätsmessungen erfolgten mit einem Physica MCR 51 Rheometer der Fa. Anton Paar Germany GmbH (DE) nach DIN EN ISO 3219/A: 1994-10.

Die Rest-Monomeren Gehalte wurden nach DIN EN ISO 10283:2007-11 gaschromatographisch mit internem Standard gemessen.

OH-Zahlen wurden titrimetrisch nach DIN 53240-2:2007-11, Säure-Zahlen nach DIN EN ISO 2114:2002-06 bestimmt. Die angegebenen OH-Gehalte wurden aus den analytisch ermittelten OH-Zahlen errechnet. Die angegebenen Werte beziehen sich jeweils auf das Gesamtgewicht der jeweiligen Zusammensetzung inklusive gegebenenfalls mitverwendeter Lösungsmittel.

Zur Bestimmung der Topfzeit wurde nicht die Verdopplung der Auslaufzeiten, gewöhnlich zu bestimmen nach DIN EN ISO 2431:2011-11 ("Bestimmung der Auslaufzeit mit Auslaufbechern"), herangezogen, sondern die Hautbildungszeit des feuchtigkeitshärtenden STPs. Durch periodische Berührung der Filmoberfläche mit dem Ende eines Holzspatels wurde derjenige Zeitpunkt ermittelt, bei dem sich die Spatelspitze anhaftende Haut von der Oberfläche hochziehen lässt.

Die Trocknungszeiten (T1, T3 und T4) wurden gemäß DIN EN ISO 9117-5:2010-07 (Trocknungsprüfung Teil 5: Abgewandeltes Bandow-Wolff-Verfahren) bestimmt.

Die Lösungsmittel- und Wasserbeständigkeiten wurden nach DIN EN ISO 4628-1:2016-07 ermittelt. Für den Test der Lösemittelbeständigkeiten wurden die Lösemittel Xylol (folgend auch als "Xy" abgekürzt), Methoxypropylacetat (folgend auch als "MPA" abgekürzt), Ethylacetat (folgend auch als "EA" abgekürzt) und Aceton (folgend auch als "Ac" abgekürzt) verwendet. Die Kontaktzeit betrug jeweils 5 min. Für die Messung der Wasserbeständigkeiten betrug die Kontaktzeit jeweils 24 h. Die Abmusterung wurde entsprechend der angeführten Norm durchgeführt. Die Prüffläche wird visuell und durch Verkratzung beurteilt, dabei wird folgende Klassifikation vorgenommen: 0 = Keine Veränderung feststellbar; 1 = Quellungsring, Oberfläche hart, nur sichtbare Veränderung; 2 = Quellungsring, geringe Erweichung; 3 = deutliche Erweichung (evtl. geringe Blasenbildung); 4 = Starke Erweichung (evtl. starke Blasenbildung), durchritzbar bis zum Untergrund; 5 = Beschichtung komplett zerstört ohne Fremdeinwirkung.

Die Bestimmung der Pendeldämpfung nach König erfolgte nach DIN EN ISO 1522:2007-04 auf Glasplatten. Die beschriebenen STP-Filme sind mit einem Rakel auf Glasplatten aufgezogen worden. Die Trockenfilmdicke betrug bei allen Filmen 35-40 µm.

Alle beschriebenen STP-Filme sind mit einem Rakel auf Glasplatten aufgezogen worden. Die Filmdicke betrug bei allen Filmen 35-40 µm.

### Liste der Handelsnamen und Abkürzungen

Borchi Kat 22 (Zinkcarboxylat-basierenden Katalysator, 100%ig) wurde von der Fa. Borchers bezogen.

Setalux DA HS 1170 BA (OH-Gehalt 3,6%, Festkörpergehalt 70%, Viskosität 1200 mPa·s) und Setalux DA 870 BA (OH-Gehalt 3,6%, Festkörpergehalt 70%, Viskosität 1200 mPa·s) Polyacrylat der Fa. Allnex.

Stabaxol 1, Tetraisopropyldiphenylcarbodiimid, der Fa. RheinChemie. Methoxypropylacetat (MPA), Butylacetat (BA), Ethylacetat (EA), Aceton (Ac) und Xylol (Xy), wurden von der Fa. Azelis bezogen.

Hexamethylendiisocyanat (HDI), Desmodur XP 2565 (IPDI-Allophanat, 80% Festkörper, NCO-Gehalt 12%, Viskosität 2.800 mPa·s) wurde von der Fa. Covestro bezogen.

Dibutylzinndilaurat (DBTL) wurde von der Fa. RheinChemie, erhältlich unter dem Handelsnamen, Addocat 201 40P, bezogen. Mercaptopropyltrimethoxysilan, ortho-Phosphorsäure, Tetraethylorthoformiat (TEOF), Aminopropyltriethoxysilan, Maleinsäurediethylester wurden von Sigma-Aldrich bezogen.

Verlaufsmittel wie BYK-141 und BYK-311 wurden von der Fa. BYK Additives & Instruments bezogen.

Lichtschutzmittel wie Tinuvin 292, Tinuvin 1130 wurden von der Fa. BASF bezogen.

Schwarzer Basislack (Permahyd ®, Base Coat 280) wurde von der Fa. Spiess Hecker eingesetzt.

Alle Reagenzien und Chemikalien wurden ohne weitere Aufreinigung eingesetzt.

### Synthese der Vernetzungsrohstoffe

### Herstellungsbeispiel 1

934 g HDI wurden in einem Glasreaktor vorgelegt und mit 1,3 g Borchi Kat 22 versetzt. Anschließend wurden 364 g 3-Mercaptopropyltrimethoxysilan zugetropft. Die Reaktionslösung wurde so lange gerührt, bis ein NCO-Gehalt von 24 Gew.-% erreicht wurde. Nach Zugabe von ortho-Phosphorsäure (20 Gew.-% in i-PrOH) wurde das nicht umgesetzte monomere HDI bei einer Temperatur von 130 °C und einem Druck von 0,1 mbar mittels zweistufiger Dünnschichtdestillation abgetrennt.

| | |
|---|---|
| NCO = | 11,2 % |
| Festkörperanteil = | 100 Gew.-% |
| Viskosität = | 515 mPa·s |

### Herstellungsbeispiel 2

478,03 g der erhaltenen Verbindungen aus Herstellungsbeispiel 1, 15,02 g TEOF und 10 Tropfen DBTL werden bei 80 °C unter trockenem Stickstoff mit 764,91 g 2-Setalux DA HS 1170 BA und 38,83 g Stabaxol 1 versetzt und die Reaktion so lange gerührt, bis ein Rest-NCO von < 0,3% erreicht wird. Das Rohprodukt wird mit 203,21 g BuAc versetzt. Es wird ein praktisch farbloses, klares Silan erhalten.

| | |
|---|---|
| NCO-Restgehalt: | 0,26 % |
| Viskosität (23 °C): | 723 mPa·s |
| Festkörper: | 70% |

### Herstellungsbeispiel 3

Das hier verwendete HDI-Polyisocyanat wurde entsprechend dem Beispiel 11 der EP-A 330 966, hergestellt. Die Reaktion wurde durch Zugabe von Dibutylphosphat bei einem NCO-Gehalt des Rohprodukts von 40% abgebrochen. Anschließend wurde nicht umgesetztes HDI mittels Dünnschichtverdampfung bei einer Temperatur von 130 °C und ein Druck von 0,2 mbar entfernt. Es wurde ein Produkt mit den folgenden Eigenschaften erhalten.

| | |
|---|---|
| NCO-Gehalt: | 21,8% |
| Viskosität (23 °C): | 3000 mPa· s |
| Festkörperanteil = | 100 Gew.-% |
| Monomeres HDI: | 0,1% |

### Harzformulierungen

### Beispiel 4 (Vergleichsbeispiel)

47,4 g Setalux DA 870 BA wurde mit 0,25 g BYK-141, 1,48 g BYK-311, 0,99 g Tinuvin 292, 1,97 g Tinuvin 1130, 3 g Addocat 201 und 20,33 g eines Gemischs aus Butylacetat/MPA/Xylol (1:1:1) vermischt. Nach Zugabe eines Gemischs aus 15,91 g Herstellungsbeispiel 3 und 8,72 g Butylaceat/Xylol (1:1) wurde das Gemisch auf einem schwarzen Basislack (Spiess Hecker, Permahyd ®, Base Coat 280) lackiert und zum Aushärten 30 min bei 60 °C erhitzt.

### Beispiel 5

40,61 g Setalux DA 870 BA wurde mit 0,21 g BYK-141, 1,27 g BYK-311, 0,84 g Tinuvin 292, 1,69 g Tinuvin 1130, 2,57 g Addocat 201 und 21,42 g eines Gemischs aus Butylacetat/MPA/Xylol (1:1:1) vermischt. Nach Zugabe eines Gemischs aus 13,63 g Herstellungsbeispiel 3, 14,29 g der Verbindung aus Herstellungsbeispiel 2 und 7,47 g Butylaceat/Xylol (1:1) wurde das Gemisch auf einem schwarzen Basislack (Spiess Hecker, Permahyd ®, Base Coat 280) lackiert und zum Aushärten 30 min bei 60 °C erhitzt.

### Anwendungsbeispiele

Bei der Zugabe von STPs zu 2K-PU-Lackformulierungen wurde überraschenderweise beobachtet, dass eine Verlängerung der Topfzeit erzielt werden kann. Um die Topfzeit zwischen 40%-70% zu steigern, reicht die Zugabe von 10 Gew.-% eines STPs mit unterschiedlichen Strukturen aus (Tabelle 1). Dadurch kann die Verarbeitungszeit einer 2K-PU-Formulierung vergrößert werden. Zudem wird eine verbesserte Kratzbeständigkeit bei gleicher Glanzhaltung in der Bewitterung beobachtet (*vide infra*).

**Tabelle 1: Topfzeitverlängerung von 2K-PU-Systemen im Vergleich zu STP-enthaltenden 2K-PU-Formulierungen. Katalysator: DBTL (0,1 Gew.-%) verwendet. Verdopplung der Viskosität bei RT.**

| Nr. | | Topfzeit (h) |
|---|---|---|
| 1 | 2K PU (Vergleichsbeispiel 4) | 1,5 |
| 2 | 2K PU + 10% STP (Beispiel 5) | 2,4 |

Die Zugabe von 10 Gew.-% eines STP (auf den Festkörper bezogen) hatte einen geringen Einfluss auf die Pendelhärte des Lackfilms (Tabelle 2 haben. Die Lösemittelbeständigkeiten der verschiedenen STP-versetzten 2K-PU-Lackfilme entsprechenden denen des Vergleichssystems (Nr.1). Die Glanzwerte (60 °C) lieferten vergleichbare Werte zum Vergleichssystem. Es wurde beobachtet, dass die Kratzbeständigkeit der Beschichtungssysteme durch Zugabe eines STPs verbessert werden kann.

**Tabelle 2:**

| | Pendelhärte | Lösemittelbeständigkeit (Xy/MPA/EA/Ac)* | Kratzbeständigkeit Nullwert | Kratzbestän-digkeit Endwert |
|---|---|---|---|---|
| | (s) | | Glanzmessung (60°) | Glanzmessung (60°) |
| Vergleichsbeispiel 4 | 159 | 0 1 3 5 | 91,2 | 48,9 |
| Beispiel 5 | 115 | 0 2 3 5 | 91,0 | 60,5 |

| | | | | |
|---|---|---|---|---|
| *Xy = Xylol, MPA = Methoxypropylacetat, EA = Ethylacetat, Ac = Aceton | | | | |

Die Zugabe von STPs, um die Topfzeit einer 2K-PU-Formulierung zu verlängern, hat keinen Einfluss auf die Bewitterungsbeständigkeit, denn die STP-haltigen Klarlacke weisen über einen Zeitraum von 1000 h im CAM 180-Test keinerlei Veränderungen auf. Diesen Befund bestätigt die Glanzmessung bei unterschiedlichen Winkeln vor sowie nach dem Bewitterungszeitraum.

**Tabelle 3: Bewitterungsstudie (CAM 180) nach 1000 h**

| | visuelle Abmusterung | Glanzmessung | Glanzmessung |
|---|---|---|---|
| | | 0h | 1000 h |
| | (1000 h) | | |
| | | (20° / 60°) | (20° / 60°) |
| Vergleichsbeispiel 4 | keine Veränderung | 92 / 94 | 91 / 95 |
| Beispiel 5 | keine Veränderung | 91 / 93 | 91 / 94 |

## Patentansprüche

1. 2-Komponenten-System umfassend oder bestehend aus einer ersten Komponente, die
A1) mindestens eine Verbindung mit mindestens einer Zerewitinoff-aktiven Gruppe;
P1) gegebenenfalls mindestens einen Katalysator;
C1) gegebenenfalls mindestens ein Lösungsmittel; und
D1) gegebenenfalls mindestens ein Additiv
umfasst oder daraus besteht und
einer zweiten Komponente, die
A2) mindestens ein Polyisocyanat; und
B2) mindestens eine der folgenden Verbindungen gemäß Formel (I): 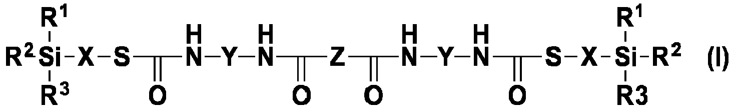 wobei
R¹ bis R³ jeweils unabhängig voneinander für gleiche oder verschiedene gesättigte oder ungesättigte, lineare oder verzweigte, aliphatische oder cycloaliphatische oder gegebenenfalls substituierte aromatische oder araliphatische Reste mit bis zu 18 Kohlenstoffatomen, die gegebenenfalls bis zu 3 Heteroatome aus der Reihe Sauerstoff, Schwefel, Stickstoff enthalten können, mit der Maßgabe, dass mindestens einer der Reste R¹, R² und R³ über ein Sauerstoffatom mit dem Siliziumatom verbunden ist,
X jeweils unabhängig voneinander für gleiche oder verschiedene gesättigte oder ungesättigte, lineare oder verzweigte, aliphatische oder cycloaliphatische oder gegebenenfalls substituierte aromatische oder araliphatische Reste mit bis zu 6 Kohlenstoffatomen steht;
Y jeweils unabhängig voneinander für gleiche oder verschiedene gesättigte oder ungesättigte, lineare oder verzweigte, aliphatische oder cycloaliphatische oder gegebenenfalls substituierte aromatische oder araliphatische Reste mit bis zu 18 Kohlenstoffatomen, die gegebenenfalls bis zu 3 Heteroatome aus der Reihe Sauerstoff, Schwefel, Stickstoff enthalten können, stehen; und
Z für eine Struktureinheit steht, die von einem mindestens difunktionellen Polyol abgeleitet ist, das ein zahlenmittleres Molekulargewicht Mₙ von 270 bis 22000 g/mol aufweist;
oder
für einen mehrwertigen Alkohol und/oder Ether- oder Esteralkohol steht, der 2 bis 14 Kohlenstoffatome enthält;
C2) gegebenenfalls mindestens ein Lösungsmittel.
D2) gegebenenfalls mindestens ein Verbindung, die von der Verbindung nach Formel (I) verschieden ist, und durch Umsetzung mindestens einer Isocyanatgruppe mit einem sekundären Amin, das eine Silangruppe enthält, erhalten wird
umfasst oder daraus besteht.

2. Das 2-Komponenten-System gemäß Anspruch 1, **dadurch gekennzeichnet, dass** die mindestens eine Verbindung A1 ausgewählt ist aus Polyolen, Polyaminen, Polyetherpolyolen, Polyesterpolyolen, Polyurethanpolyolen, Polysiloxanpolyolen, Polycarbonatpolyolen, Polyetherpolyaminen, Polybutadienpolyolen, Polyacrylatpolyolen und Polymethacrylatpolyolen sowie deren Mischpolymerisate.

3. Das 2-Komponenten-System gemäß Anspruch 1 oder 2, **dadurch gekennzeichnet, dass** der mindestens eine Katalysator B1 ausgewählt ist aus der Klasse der Zinnkatalysatoren, Bismutkatalysatoren, Zinkkatalysatoren, Zirkoniumkatalysatoren und Aminbasen.

4. Das 2-Komponenten-System gemäß einem der vorangehenden Ansprüche, **dadurch gekennzeichnet, dass** das mindestens eine Lösungsmittel C1 ausgewählt ist aus aromatischen Lösungsmitteln und aliphatischen Lösungsmitteln sowie deren Mischungen.

5. Das 2-Komponenten-System gemäß einem der vorangehenden Ansprüche, **dadurch gekennzeichnet, dass** das mindestens eine Additive D1 ausgewählt ist aus UV-Stabilisatoren, Antioxidantien und Verlaufsmittel, oder Mischungen davon.

6. Das 2-Komponenten-System gemäß einem der vorangehenden Ansprüche, **dadurch gekennzeichnet, dass** das mindestens eine Polyisocyanat A2 ausgewählt ist aus Di- oder Triisocyanaten, wie 1,4-Butandiisocyanat, Pentamethylendiisocyanat, Hexamethylendiisocyanat, 4-Isocyanatomethyl-1,8-octandiisocyanat, 4,4'-Methylenbis(cyclohexylisocyanat), 1,-10-Decamethylendiisocyanat, 3,5,5-Tri-methyl-1-isocyanato-3-isocyanatomethylcyclohexan, 1,3- sowie 1,4-Bis(isocyanatomethyl)cyclohexan, Isophorondiisocyanat, 1,5-Naphthalindiisocyanat, Diisocyanatodiphenylmethan, wie 2,2'-, 2,4'- und 4,4'-MDI oder Mischungen daraus, Diisocyanatomethylbenzol, wie 2,4- und 2,6-Toluylendiisocyanat, und technische Gemische der beiden Isomeren sowie 1,3- und/oder 1,4-Bis(isocyanatomethyl)benzol, 3,3'-Dimethyl-4,4'-biphenyldiisocyanat, 1,4-Paraphenylendiisocyanat sowie Cyclohexyldiisocyanat und die aus vorgenannten, einzeln oder in Mischung erhältlichen, höhermolekularen Oligomeren mit Biuret-, Uretdion-, Isocyanurat-, Iminooxadiazindion-, Allophanat-, Urethan- sowie Carbodiimid/Uretonimin-Struktureinheiten.

7. Das 2-Komponenten-System gemäß einem der vorangehenden Ansprüche, **dadurch gekennzeichnet, dass** D2 ausgewählt ist aus
i) mindestens einer Verbindung der Formel (II) 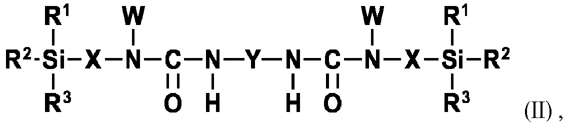 wobei
R¹, R² und R³ jeweils unabhängig voneinander für gleiche oder verschiedene gesättigte oder ungesättigte, lineare oder verzweigte, aliphatische oder cycloaliphatische oder gegebenenfalls substituierte aromatische oder araliphatische Reste mit bis zu 18 Kohlenstoffatomen, die gegebenenfalls bis zu 3 Heteroatome aus der Reihe Sauerstoff, Schwefel, Stickstoff enthalten können, mit der Maßgabe, dass mindestens einer der Reste R¹, R² und R³ über ein Sauerstoffatom mit dem Siliziumatom verbunden ist,
X für einen linearen oder verzweigten organischen Rest mit bis zu 6 Kohlenstoffatomen steht und
Y für einen linearen oder verzweigten, aliphatischen oder cycloaliphatischen Rest mit 4 bis 18 Kohlenstoffatomen.
W unabhängig voneinander für eine Formyl- oder Acetylgruppe oder auch eine COO-Gruppe mit einem Rest G stehen, G kann dabei mono-, di-,tri- oder tetrafunktionell sein und steht für einen linearen oder verzweigten, aliphatischen oder cycloaliphatischen Rest oder eine davon abgeleitete, verbindende Einheit mit 4 bis 18 Kohlenstoffatomen oder einem gegebenenfalls substituierten aromatischen oder araliphatischen Rest stehen; und/oder
ii) mindestens einer Verbindung der Formel (III) 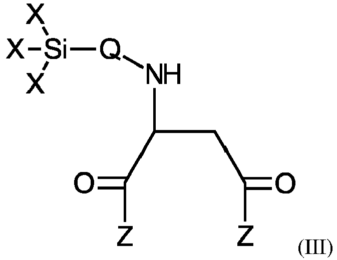 wobei
X jeweils unabhängig ausgewählt ist aus Alkoxy- oder Alkylresten, oder zwei Reste X mit dem Siliziumatom, an das sie gebunden sind einen Si substituierten Kohlenwasserstoffring bilden, mit jeweils bis zu 10 Kohlenstoffatomen, mit der Maßgabe, dass das Si-Atom mindestens einen Alkoxyrest aufweist,
Q ein difunktioneller linearer oder verzweigter aliphatischer Rest mit bis zu 10 Kohlenstoffatomen ist; und
Z jeweils ein Alkoxyrest mit 1 bis 10 Kohlenstoffatomen ist.

8. Das 2-Komponenten-System gemäß einem der vorangehenden Ansprüche, **dadurch gekennzeichnet, dass** B2 bevorzugt einen Isocyanatgehalt von kleiner als 2 % aufweist.

9. Das 2-Komponenten-System gemäß einem der vorangehenden Ansprüche, **dadurch gekennzeichnet, dass** die Bestandteile der ersten Komponente Gew.-Teile A1 und Gew.-Teile B1 im Verhältnis zu den Bestandteilen Gew.-Teile C1 und Gew.-Teile D1 in einem Gewichtsverhältnis von 0,5 bis 8 vorliegen.

10. Das 2-Komponenten-System gemäß einem der vorangehenden Ansprüche, **dadurch gekennzeichnet, dass** die Bestandteile der zweiten Komponente Gew.-Teile A2 und Gew.-Teile B2 zu den Bestandteilen Gew.-Teile C2 und Gew.-Teile D2 in einem Gewichtsverhältnis von 0,5 bis 10 vorliegen.

11. Das 2-Komponenten-System gemäß einem der vorangehenden Ansprüche, **dadurch gekennzeichnet, dass** die Bestandteile der ersten Komponente Gew.-Teile A1, und gegebenenfalls Gew.-Teile B1, Gew.-Teile C1 und Gew.-Teile D1 zu den Bestandteilen der zweiten Komponente, Gew.-Teile A2, Gew.-Teile B2 und gegebenenfalls Gew.-Teile C2 und Gew.-Teile D2 in einem Gewichtsverhältnis von 0,6 bis 11 vorliegen.

12. Verfahren zur Herstellung von Silizium-haltigen Polyurethanen, umfassend das Umsetzen der ersten Komponente mit der zweiten Komponente des 2-Komponenten-Systems gemäß einem der Ansprüche 1 bis 11.

13. Silizium haltige Polyurethane erhältlich durch das Verfahren gemäß Anspruch 12.

14. Verwendung des 2-Komponenten-Systems gemäß einem der Ansprüche 1 bis 11 zur Herstellung von Lack, Dicht- oder Klebstoffen.
